# EUROPEAN PATENT APPLICATION

(11) **EP 2 109 316 A1**
(43) Date of publication of application: **14.10.2009**
(21) Application number: 08007218.4
(22) Date of filing: 11.04.2008
(51) Int. Cl.: H04N 7/24, H04N 7/16

(54) **Wireless video and audio broadcasting device**

(71) Applicant: Jow Tong Technology Co., Ltd., Yung Kang City, Tainan Hsien, Taiwan (CN)
(72) Inventor: Lin, Chung-Hung, Tainan County (TW)
(74) Representative: Kador & Partner

(57) **Abstract**

A broadcasting device includes a video and audio transmitter, several video and audio receivers to wirelessly receive signals from the video and audio transmitter, and a remote control; the video and audio transmitter is connected to a multimedia broadcasting device such as computers, MP3, MP4, CD and DVD players; the video and audio receivers are each connected to a respective second broadcasting device such as televisions, overhead projectors, stereos, and speakers so that video and audio information contained in the multimedia broadcasting device can be transmitted through the transmitter, received with the receivers, and broadcasted through the second broadcasting devices connected to the receivers; the remote control is used to control the video and audio transmitter and the broadcasting devices connected to the receivers.

## Description

### BACKGROUND OF THE INVENTION

### 1. Field of the invention

1. The present invention relates to a wireless video and audio broadcasting device, more particularly one, which allows video and audio signals of a computer/multimedia broadcasting device to be wirelessly transmitted to and broadcasted through other broadcasting devices, e.g. televisions, overhead projectors, stereos, and speakers, which are placed separate from the computer/multimedia broadcasting device in different rooms; the broadcasting devices have larger screens and higher image and sound quality so that the viewers and listeners can have more enjoyment.

### 2. Brief Description of the Prior Art

Personal computers have become a necessity of modem life, which can help people to easily manage data, handle many things, and allow people to see a film and listen to music, search information on the World Wide Web, and share video and audio information on various video and audio sharing sites whose number has been rapidly increasing.

A wide variety of electronic devices are available for broadcasting multimedia video and audio signals such as films, images, and music besides computers, e.g. MP3 (MPEG-Movie Picture Experts Group-1 Layer3) player, MP4 (MPEG-4; Movie Picture Experts Group-4) player, CD (Compact Disc) player, VCD (Video Compact Disc) player, and DVD (Digital Versatile/Video Disc) player. However, the following problems are found in using the above-mentioned electronic devices to broadcast video and audio information.
1. Computers are usually positioned in a study of a house, and used with a screen that has a relatively small size as compared with televisions in a parlor and video/audio room. Therefore, people are prone to have eyestrain after continuing watching a film on the computer screen a certain length of time. In addition, the study can't be as comfortable as a parlor or a video/audio room, and usually doesn't have enough seats and space for many persons.
2. When the user is watching a film on the computer/broadcasting device, other people aren't allowed to share the film on other screens or broadcasting devices in different rooms of a house.

Therefore, it is a main object of the present invention to provide a wireless video and audio broadcasting device to overcome the above problems.

### SUMMARY OF THE INVENTION

A wireless video and audio broadcasting device according to an embodiment of the present invention includes a video and audio transmitter, several video and audio receivers to wirelessly receive signals from the video and audio transmitter, and a remote control. The video and audio transmitter is connected to a multimedia broadcasting device such as computers, MP3, MP4, CD and DVD players. The video and audio receivers are each connected to a respective broadcasting device such as televisions, overhead projectors, stereos, and speakers so that video and audio information contained in the multimedia broadcasting device can be transmitted through the transmitter, received with the receivers, and broadcasted through the broadcasting devices connected to the receivers. The remote control is used to control the transmitter and the receivers so as to operate the external broadcasting devices/computers connected to the receivers and the transmitter. Therefore, people can share a film or music through the separate external broadcasting devices in different rooms. Furthermore, the external broadcasting devices have larger screens and higher image and sound quality therefore the viewers and listeners can be more satisfied.

### BRIEF DESCRIPTION OF THE DRAWINGS

The present invention will be better understood by referring to the accompanying drawings, wherein:
Fig. 1 is a perspective view of the present invention,
Fig. 2 is a block diagram of the structure of the present invention,
Fig. 3 is a block diagram of the structure of the video and audio transmitter of the present invention,
Fig. 4 is a block diagram of the structure of the video and audio receiver of the present invention,
Fig. 5 is a block diagram of the structure of the remote control of the present invention,
Fig. 6 is a view used to illustrate the use of the present invention (1), and
Fig. 7 is a view to illustrate the use of the present invention (2).

### DETAILED DESCRIPTION OF THE PREFERRED EMBODIMENTS

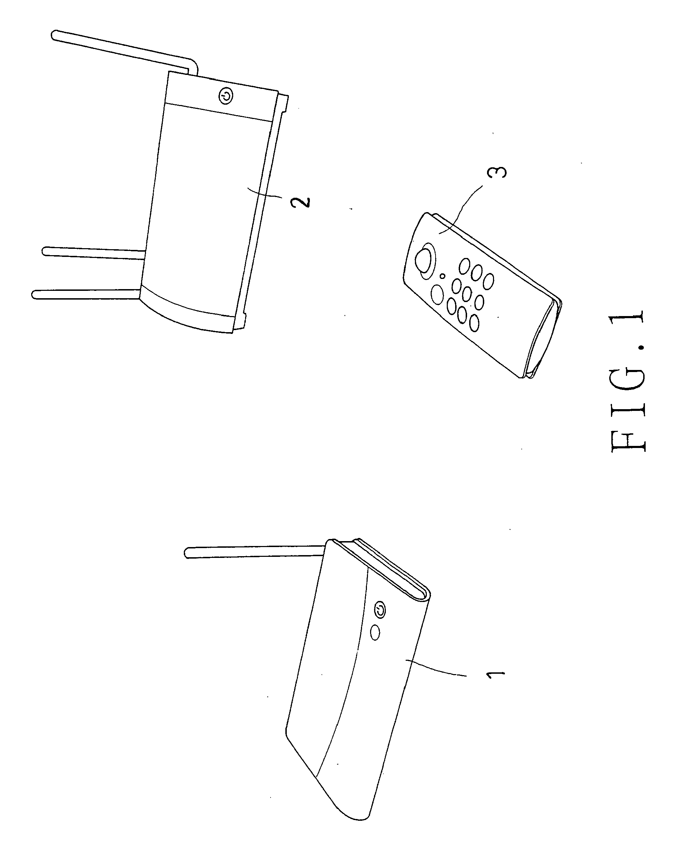

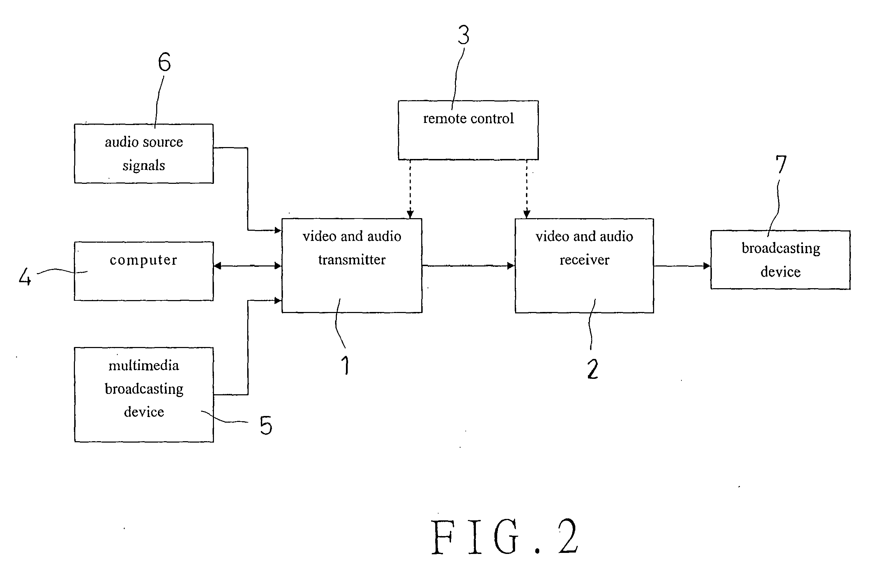

Referring to Figs. 1 and 2, a preferred embodiment of a wireless video and audio broadcasting device of the present invention consists of a video and audio transmitter 1, a video and audio receiver 2, and a remote control 3.

The video and audio transmitter 1 can be connected to computers or various multimedia broadcasting devices 5 such as CD, DVD, MP3, and MP4 players, and audio source signals 6. The video and audio receiver 2 can be connected to various broadcasting devices 7 such as televisions, overhead projectors, stereos, and speakers.

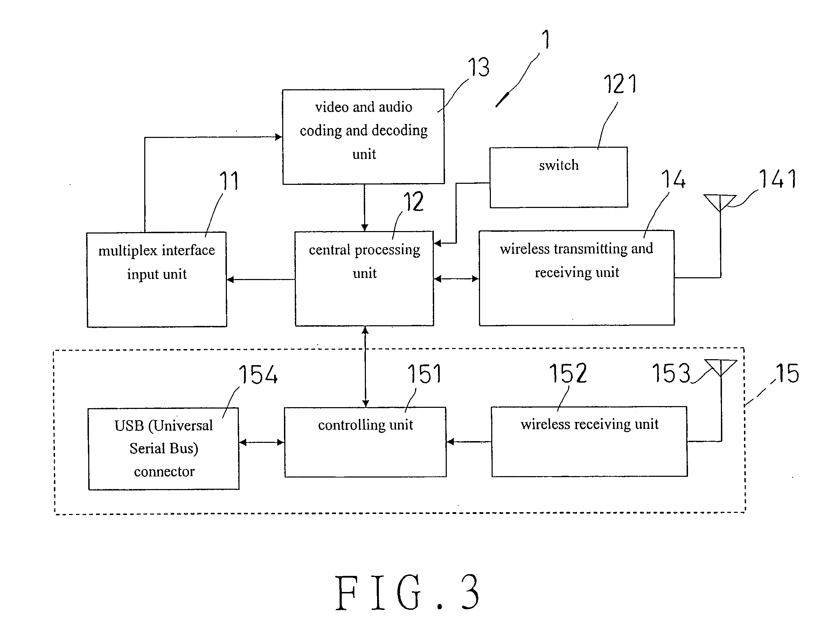

Referring to Fig. 3, a structural block diagram, the video and audio transmitter 1 includes a multiplex interface input unit 11 to be connected to computers 4, various multimedia broadcasting devices 5, Multimedia on Demand (MOD) or network cables for inputting video and audio signals such as VGA, DVI, HDMI, and Composite. The video and audio transmitter 1 includes a central processing unit 12, which is connected to the multiplex interface input unit 11, and which has a switch 121 connected thereto to choose the input signals with. The video and audio transmitter 1 includes a video and audio coding and decoding unit 13, which is connected to the central processing unit 12 as well as the multiplex interface input unit 11, and to which audio source signals are directly connected. The video and audio transmitter 1 includes a wireless transmitting and receiving unit 14, which is connected to the central processing unit 12, and which has an antenna 141 connected thereto to transmit and receive signals of a frequency between 2.4 GHz and 5 GHz in accordance with 802.11n standard through the antenna 141. The video and audio transmitter 1 further includes a remote control radio frequency module 15, which is connected to the central processing unit 12; the remote control radio frequency module 15 includes a controlling unit 151, which is connected to the central processing unit 12. The remote control radio frequency module 15 includes a wireless receiving unit 152, which is connected to the controlling unit 151 as well as an antenna 153 to receive radio frequency signals with a frequency of 433 Hz. Furthermore, the controlling unit 151 has an USB (Universal Serial Bus) connector 154 for connection with a computer 4.

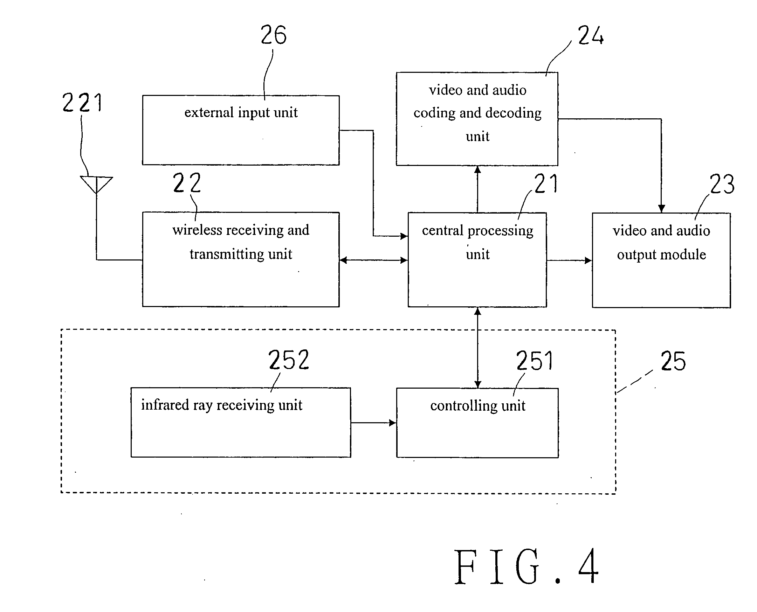

Referring to Fig. 4, a structural block diagram, the video and audio receiver 2 includes a central processing unit 21, and a wireless receiving and transmitting unit 22, which is connected to the central processing unit 21, and which has an antenna 221 connected thereto to receive and transmit signals with a frequency between 2.4 GHz and 5 GHz in accordance with 802.11n standard through the antenna 221. The video and audio receiver 2 includes a video and audio output module 23, and a video and audio coding and decoding unit 24, which are connected to the central processing unit 21. The video and audio coding and decoding unit 24 is further connected to the video and audio output module 23. The video and audio output module 23 is connected to various broadcasting devices 7 such as televisions, overhead projectors, stereos, and speakers by means of signal cables so that video and audio signals can be input. The video and audio receiver 2 further includes a remote control controlling module 25, which is connected to the central processing unit 21; the remote control controlling module 25 includes a controlling unit 251, which is connected to the central processing unit 21, and which is connected to an infrared ray receiving unit 252 to receive infrared ray signals transmitted from the remote control 3. The central processing unit 21 is connected to an external input unit 26 having USB ports, and network cable socket RJ-45 so that other external devices such as hard disks, portable memory cards, and network cables can be connected to the external input unit 26 in order for video and audio signals to be input into the central processing unit 21. Consequently, the video and audio signals are coded and decoded with the video and audio coding and decoding unit 24, and are next sent from the video and audio output module 23 to broadcasting devices 7, e.g. televisions, overhead projectors, stereos, and speakers, through the signal cables; thus, the signals can be broadcasted through the broadcasting devices 7.

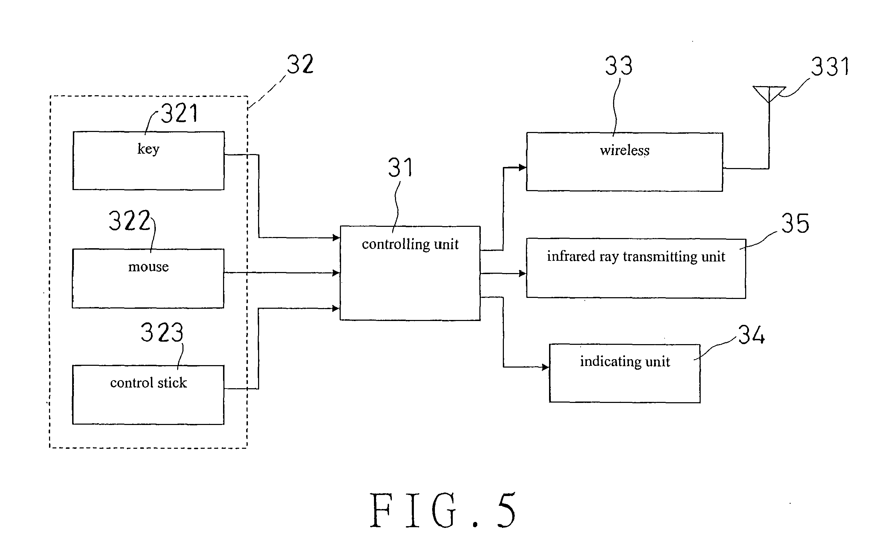

Referring to Fig. 5, a structural block diagram, the remote control 3 includes a controlling unit 31, and an input unit 32. The input unit 32 is connected to the controlling unit 31, and can be keys, a computer control stick or a computer mouse. The remote control 3 includes a wireless transmitting unit 33, which is connected to the controlling unit 31, and is equipped with an antenna 331 to transmit signals with a frequency of 433 Hz to control and operate the video and audio transmitter 1. The remote control 3 further includes an infrared ray transmitting unit 35, which is connected to the controlling unit 31 to control and operate the video and audio receiver 2. In addition, an indicating unit 34 is connected to the controlling unit 31, which can emit a beam to serve as a pointer in a briefing, and which can be a laser module.

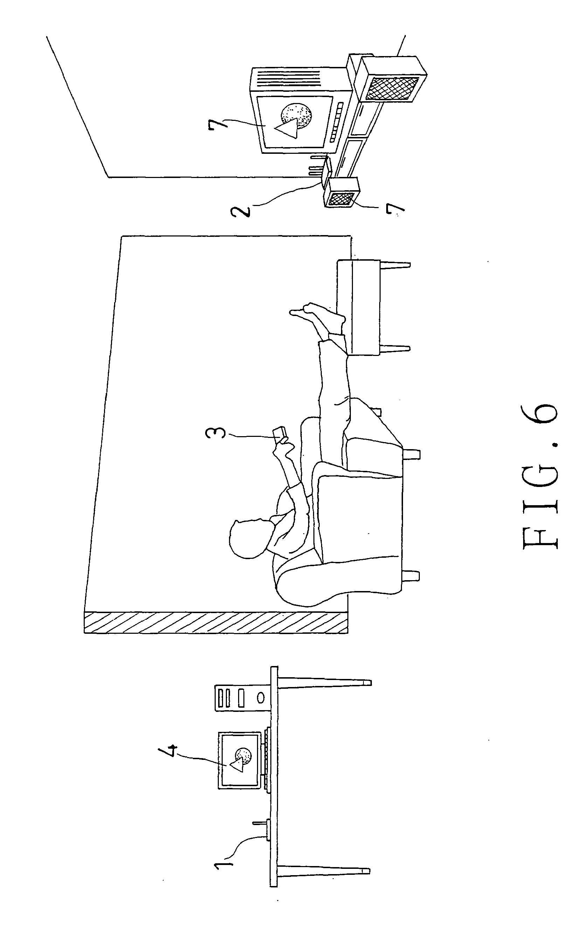

Fig. 6 illustrates a way to use the present wireless video and audio broadcasting device, wherein the video and audio transmitter 1 is connected to a computer 4 in a study, and several such video and audio receivers 2 are respectively connected to various broadcasting devices 7 in a parlor and a video/audio room of a house, e.g. televisions, overhead projectors, stereos, and speakers; in use, the users either manually moves the switch 121 or operates the remote control 3 for the central processing unit 12 to choose input signal sources through the multiplex interface input unit 11. Next, the video and audio coding and decoding unit 13 will code the video and audio information in the computer 4, multimedia broadcasting devices 5, Multimedia on Demand (MOD) or network cables, and the wireless transmitting and receiving unit 14 will transform the data into signals with a frequency in accordance with 802.11n standard, and the signals will be sent out through the antenna 141. Next, the wireless receiving and transmitting units 22 of the video and audio receivers 2 will receive the above signals with a frequency in accordance with 802.11n standard through the antennas 221, and the video and audio coding and decoding units 24 of the receivers 2 will decode the signals so that the broadcasting devices 7 connected to the receivers 2 can broadcast to the viewers; therefore, the viewers can view a movie on broadcasting devices 7 with large screens and high image and sound quality instead of an equivalent device used with the computer 4, which is in a different room and distant from the various broadcasting devices 7; the viewers will have more pleasure in seeing a movie on the broadcasting devices 7 because the broadcasting devices 7 have large screens and high image and sound quality. Furthermore, when the video and audio transmitter 1 is connected to a computer 4 through the USB connector 154 for one to play computer game, the user can control the computer 4 by means of the input unit 32 of the remote control 3, e.g. the keys, computer control stick, and computer mouse; in operating the input unit 32, the remote control 3 will send out signals with a frequency of 433 Hz, and the video and audio transmitter 1 will receive the signals through the antenna 153 of the remote control radio frequency module 15 thereof, and in turn the central processing unit 12 will transfer the signals to the computer 4 through the USB connector 154 so that the computer 4 can be controlled by means of the remote control 3.

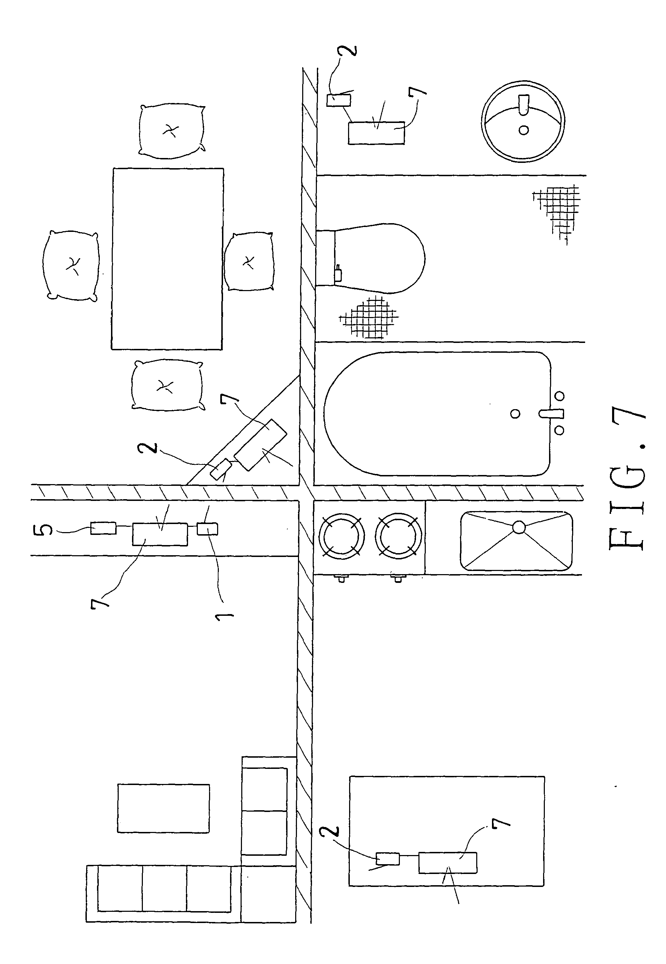

Fig. 7 illustrates another way to use the present wireless video and audio broadcasting device, wherein the video and audio transmitter 1 is connected to a multimedia broadcasting device 5, e.g. VCD and DVD players, and several such video and audio receivers 2 are respectively connected to various broadcasting devices 7 positioned in different rooms; a film and music from the multimedia broadcasting device 5 will be wirelessly sent out through the video and audio transmitter 1 so that the video and audio receivers 2 can receive the film and music, and the broadcasting device 7 can broadcast the film and music. Therefore, people won't miss the film and music even if they have to stay in the different rooms to carry out their respective activities. Furthermore, if the video and audio transmitter 1 is connected to the signal cable of Multimedia on Demand (MOD), a chosen film and music from the MOD will be wirelessly sent out through the video and audio transmitter 1 so that the video and audio receivers 2 can receive the film and music, and the broadcasting device 7 can broadcast the film and music for people to watch and listen to in different rooms at the same time.

If one such video and audio receiver 2 is connected to a broadcasting device 7 at the video and audio output module 23 with signal cables, and is further connected to a video and audio data containing/transferring device at the external input unit 26 equipped with USB ports as well as network cable sockets RJ-45, video and audio data from the data containing/transferring device can be processed with the central processing unit 21 and the video and audio coding and decoding unit 24 of the video and audio receiver 2, and next broadcasted through the broadcasting device 7. And, the user can control the video and audio data connected to the external input unit 26 by means of the infrared ray transmitting unit 35 of the remote control 3.

From the above description, it can be seen that the present invention has the following advantages over the prior arts:
1. Video and audio signals from a computer can be broadcasted through a broadcasting device separate from the computer if the video and audio transmitter of the present invention is connected to the computer to wirelessly transmit the video and audio signals, and the video and audio receiver is connected to the broadcasting device to wirelessly receive the signals for the broadcasting device to broadcast; the broadcasting device has a large screen and high image and sound quality, and in turn the viewers will have more pleasure in watching a film or listening to music on the broadcasting device.
2. Video and audio information from a multimedia broadcasting device can be broadcasted through several broadcasting devices, which are placed separate from the multimedia broadcasting device in different rooms, if the video and audio transmitter of the invention is connected to the multimedia broadcasting device, and several such video and audio receivers are connected to the broadcasting devices respectively. Therefore, it isn't necessary to install signal cables between the multimedia broadcasting device and each of the different broadcasting devices, and the present invention can provide much convenience.
3. Various devices such as computers, multimedia broadcasting devices, Multimedia on Demand (MOD), and network cables can be connected to the video and audio transmitters through the multiplex interface input unit 11 so that the user has more choices of video and audio signal sources. Therefore, the present invention is very practical.
4. Video and audio signals from Multimedia on Demand (MOD) can be broadcasted through several broadcasting devices, which are placed separate from the installation location of MOD in different rooms, if the video and audio transmitter is connected to the MOD, and several such video and audio receivers are connected to the broadcasting devices respectively. Therefore, it isn't necessary to install an MOD in each room of a house, and the present invention provides the user with much convenience.
5. The video and audio receiver of the present invention includes an external input unit having USB ports and network cable socket RJ-45 so that another video and audio data containing/transferring device can be connected to the external input unit for video and audio data to be broadcasted through a broadcasting device connected to the video and audio receiver. And, the user can control the video and audio data connected to the external input unit by means of the remote control. Therefore, the present invention is very practical.

## Claims

1. A wireless video and audio broadcasting device, comprising
(a) a video and audio transmitter (1), which includes:
a multiplex interface input unit (11) for video and audio signals to be input into the video and audio transmitter (1);
a central processing unit (21) connected to the multiplex interface input unit (11);
a video and audio coding and decoding unit (24) connected to the central processing unit (21) as well as the multiplex interface input unit (11);
a wireless transmitting and receiving unit (14) connected to the central processing unit (21); the wireless transmitting and receiving unit (14) having an antenna (141); and
a remote control radio frequency module (15) connected to the central processing unit (21); the remote control radio frequency module (15) including a controlling unit (151), which is connected to the central processing unit (21); the remote control radio frequency module (15) including a wireless receiving unit (152) connected to the controlling unit (151) thereof; the wireless receiving unit (152) having an antenna (153); the controlling unit (151) of the remote control radio frequency module (15) having an USB (Universal Serial Bus) connector (154);
(b)a video and audio receiver (2), which includes:
a central processing unit (21);
a wireless receiving and transmitting unit (22) connected to the central processing unit (21); the wireless receiving and transmitting unit (22) having an antenna (221);
a video and audio output module (23) connected to the central processing unit (21) for allowing video and audio signals to be output;
a video and audio coding and decoding unit (24) connected to the central processing unit (21)as well as the video and audio output module (23); and
a remote control controlling module (25) connected to the central processing unit (21); the remote control controlling module (25) including a controlling unit (251), which is connected to the central processing unit (21), and which has an infrared ray receiving unit (252) connected thereto;
(c) a remote control (3), which includes:
a controlling unit (31);
an input unit (32) connected to the controlling unit (31);
a wireless transmitting unit (33) connected to the controlling unit; the wireless transmitting unit (33) having an antenna (331); and
an infrared ray transmitting unit (35) connected to the controlling unit (31).

2. The wireless video and audio broadcasting device as claimed in claim 1, wherein the wireless transmitting and receiving unit (14) of the video and audio transmitter (1) is used to transmit and receive signals of a frequency between 2.4 GHz and 5 GHz in accordance with 802.11n standard through the antenna (141), and the wireless receiving and transmitting unit (14) of the video and audio receiver (2) is used to transmit and receive signals of a frequency between 2.4 GHz and 5 GHz in accordance with 802.11n standard through the antenna.

3. The wireless video and audio broadcasting device as claimed in claim 1, wherein the wireless transmitting unit (33) of the remote control (3) is used to transmit radio frequency signals with a frequency of 433 Hz, and the wireless receiving unit (152) of the remote control radio frequency module (15) of the video and audio transmitter (1) is used to receive radio frequency signals with a frequency of 433 Hz.

4. The wireless video and audio broadcasting device as claimed in claim 1, wherein the video and audio coding and decoding unit (24) of the video and audio transmitter (1) allows audio source signals (6) to be directly connected thereto.

5. The wireless video and audio broadcasting device as claimed in claim 1, wherein the central processing unit (12) of the video and audio receiver (2) is connected to an external input unit (26).

## Amended claims

### Amended claims in accordance with Rule 137(2) EPC.

**1.** A wireless video and audio broadcasting device, comprising
(a) a video and audio transmitter, which includes:
a multiplex interface input unit for video and audio signals to be input into the video and audio transmitter;
a central processing unit connected to the multiplex interface input unit;
a video and audio coding and decoding unit connected to the central processing unit as well as the multiplex interface input unit;
a wireless transmitting and receiving unit connected to the central processing unit; the wireless transmitting and receiving unit having an antenna; and
a remote control radio frequency module connected to the central processing unit; the remote control radio frequency module including a controlling unit, which is connected to the central processing unit; the remote control radio frequency module including a wireless receiving unit connected to the controlling unit thereof; the wireless receiving unit having an antenna; the controlling unit of the remote control radio frequency module having an USB (Universal Serial Bus) connector;
(b)a video and audio receiver, which includes:
a central processing unit;
a wireless receiving and transmitting unit connected to the central processing unit; the wireless receiving and transmitting unit having an antenna;
a video and audio output module connected to the central processing unit for allowing video and audio signals to be output;
a video and audio coding and decoding unit connected to the central processing unit as well as the video and audio output module; and
a remote control controlling module connected to the central processing unit; the remote control controlling module including a controlling unit, which is connected to the central processing unit, and which has an infrared ray receiving unit connected thereto;
(c) a remote control, which includes:
a controlling unit;
an input unit connected to the controlling unit;
a wireless transmitting unit connected to the controlling unit; the wireless transmitting unit having an antenna; and
an infrared ray transmitting unit connected to the controlling unit.

**2.** The wireless video and audio broadcasting device as claimed in claim 1, wherein the wireless transmitting and receiving unit of the video and audio transmitter is used to transmit and receive signals of a frequency between 2.4 GHz and 5 GHz in accordance with 802.11n standard through the antenna, and the wireless receiving and transmitting unit of the video and audio receiver is used to transmit and receive signals of a frequency between 2.4 GHz and 5 GHz in accordance with 802.11n standard through the antenna.

**3.** The wireless video and audio broadcasting device as claimed in claim 1, wherein the wireless transmitting unit of the remote control is used to transmit radio frequency signals with a frequency of 433 MHz, and the wireless receiving unit of the remote control radio frequency module of the video and audio transmitter is used to receive radio frequency signals with a frequency of 433 MHz.

**4.** The wireless video and audio broadcasting device as claimed in claim 1, wherein the video and audio coding and decoding unit of the video and audio transmitter allows audio source signals to be directly connected thereto.

**5.** The wireless video and audio broadcasting device as claimed in claim 1, wherein the central processing unit of the video and audio receiver is connected to an external input unit.
